# EUROPEAN PATENT APPLICATION

(11) **EP 4 583 302 A1**
(43) Date of publication of application: **09.07.2025**
(21) Application number: 23860148.8
(22) Date of filing: 23.08.2023
(51) Int. Cl.: H01M 50/574, H01M 50/204, H01M 50/317

(54) **BATTERY PACK**

(30) Priority: 02.09.2022 JP 2022139692
(71) Applicant: AESC Japan Ltd., Kanagawa, 2520012 (JP)
(72) Inventor: TAKAGI, Gentarou, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2023/030279
(87) International publication number: WO 2024/048385

(57) **Abstract**

A battery pack (10) includes a plurality of battery modules (100), an accommodation body (200) that defines an accommodation space (250) accommodating the plurality of battery modules (100), a lower bracket (310) and an upper bracket (320) overlapping in a plurality of stages with at least a portion of the accommodation space (250), and a disconnect switch (410) for disconnecting a circuit electrically connecting the battery modules (100) to each other and provided to the lower bracket (310) and the upper bracket (320).

## Description

### TECHNICAL FIELD

The present invention relates to a battery pack.

### BACKGROUND ART

In recent years, battery packs used for various purposes such as automobiles have been developed. A battery pack includes a plurality of battery modules, an accommodation body in which a plurality of modules is accommodated, and a disconnect switch for disconnecting a circuit electrically connecting the battery modules to each other. The disconnect switch may also be generally referred to as, for example, a service disconnect switch (SD/SW) or a service plug.

Patent Document 1 describes one example of a battery pack. In the battery pack, a service plug is supported by a support member fixed to an accommodation member.

Patent Document 2 describes one example of a battery pack. In the battery pack, a middle base is provided above a battery module. An SD/SW and another electronic component are installed on the middle base.

### RELATED DOCUMENT

### PATENT DOCUMENT

Patent Document 1: Japanese Patent Application Publication No. 2021-174663
Patent Document 2: International Patent Publication No. 2013/186878

### DISCLOSURE OF THE INVENTION

### TECHNICAL PROBLEM

In the battery pack described in Patent Document 1, for example, the support member is locally arranged in a region where the service plug is arranged. In this case, however, the area of the support member is relatively small. This may make it difficult to mount a component other than the service plug on the support member. Accordingly, it may be difficult to improve mounting efficiency of a component around the service plug. In the battery pack described in Patent Document 2, for example, the SD/SW and another electronic component are mounted on the middle base. In this case, however, it may be difficult to arrange the SD/SW at a higher position than the another electronic component.

One example of an object of the present invention is to locally arrange a disconnect switch at a high position while improving mounting efficiency of a component around the disconnect switch. Another object of the present invention will become apparent from description in the present specification.

### SOLUTION TO PROBLEM

An aspect of the present invention is as follows.
[1] A battery pack including:
   a plurality of battery modules;
   an accommodation body that defines an accommodation space accommodating the plurality of battery modules;
   a plurality of brackets overlapping in a plurality of stages with at least a portion of the accommodation space; and
   a disconnect switch for disconnecting a circuit electrically connecting the battery modules to each other, the disconnect switch being provided to the plurality of brackets.
[2] The battery pack according to [1], further including
   an electronic component provided to at least one of the plurality of brackets, the electronic component being for controlling the plurality of battery modules.
[3] The battery pack according to [1] or [2], further including
   a breather through which air inside the accommodation space and air outside the accommodation space are passable, wherein
   the disconnect switch and the breather are arranged on opposite sides of the plurality of brackets to each other.

### ADVANTAGEOUS EFFECTS OF INVENTION

According to the aspect of the present invention described above, the mounting efficiency of a component around the disconnect switch can be improved, and the disconnect switch can be locally arranged at a high position.

### BRIEF DESCRIPTION OF THE DRAWINGS

[Fig. 1] A perspective view of a battery pack according to an embodiment.
[Fig. 2] A plan view of the battery pack according to the embodiment with an upper case removed.
[Fig. 3] A plan view of Fig. 2 with a lower bracket and an upper bracket removed.
[Fig. 4] A view illustrating an A-A cross section in Fig. 2 together with a floor panel.

### DESCRIPTION OF EMBODIMENTS

Hereinafter, an embodiment according to the present invention is described using the drawings. In all the drawings, a similar component is assigned with a similar reference sign, and description thereof is omitted as appropriate.

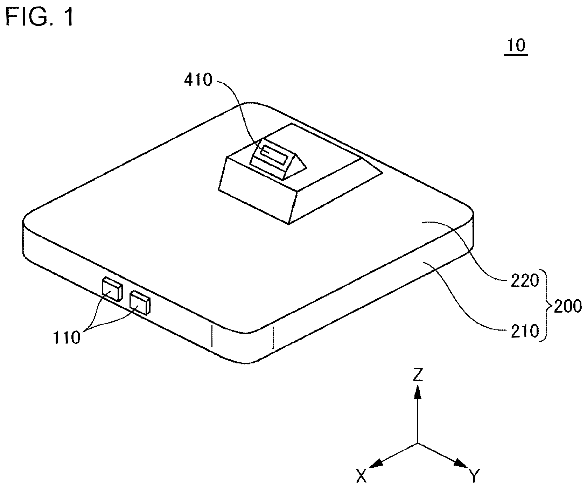

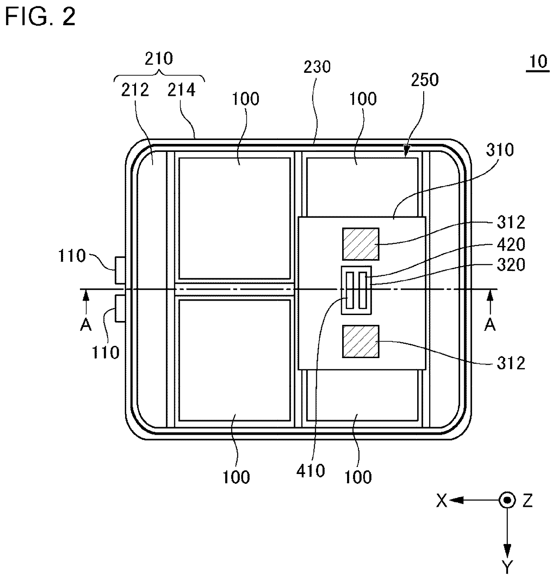

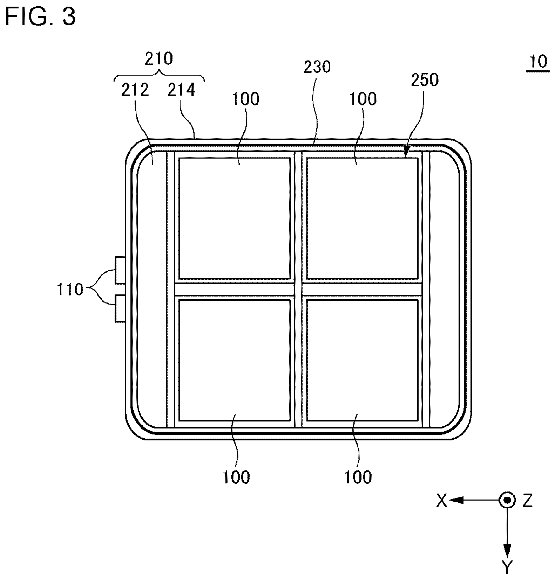

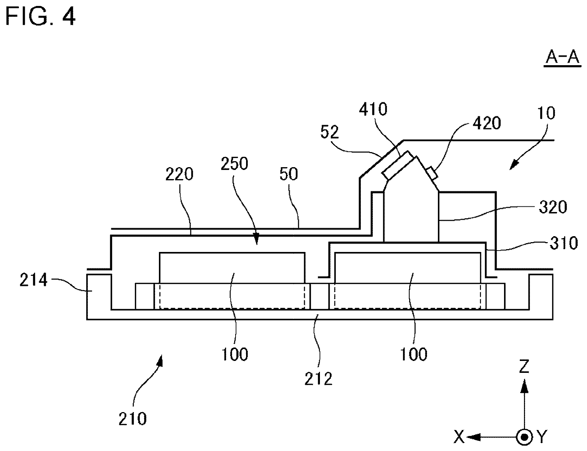

Fig. 1 is a perspective view of a battery pack 10 according to an embodiment. Fig. 2 is a plan view of the battery pack 10 according to the embodiment with an upper case 220 removed. Fig. 3 is a plan view of Fig. 2 with a lower bracket 310 and an upper bracket 320 removed. Fig. 4 is a view illustrating an A-A cross section in Fig. 2 together with a floor panel 50.

In the embodiment, the battery pack 10 is mounted on an automobile. Specifically, as illustrated in Fig. 4, the battery pack 10 is mounted below a floor panel 50 between a front wheel and a rear wheel of the automobile. Hereinafter, unless otherwise specified, the battery pack 10 is described as being mounted below the floor panel 50. However, the battery pack 10 is also applicable to a purpose other than an automobile.

In each figure, an X direction, a Y direction, and a Z direction are illustrated for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an upward-downward direction of the battery pack 10. The arrow pointing in the X direction, and the arrows pointing in the Y direction and pointing in the Z direction indicate a front direction, a left direction, and an upward direction of the battery pack 10, respectively. In each of Figs. 2 and 3, the white circle with a black dot indicating the Z direction indicates that the arrow pointing to the Z direction extends from the back to the front of the paper. In Fig. 4, the white circle with a black dot indicating the Y direction indicates that the arrow pointing to the Y direction extends from the back to the front of the paper. However, the relationship between the X direction, the Y direction, and the Z direction, and the front-rear direction, the left-right direction, and the upward-downward direction of the battery pack 10 are not limited to this example.

In the embodiment, the front-rear direction, the left-right direction, and the upward-downward direction of the battery pack 10 are determined by the automobile on which the battery pack 10 is mounted. The X direction, the Y direction, and the Z direction indicate the front-rear direction, the left-right direction, and the upward-downward direction of the automobile, respectively. The arrow pointing in the X direction, the arrow pointing in the Y direction, and the arrow pointing in the Z direction indicate the front direction, the left direction, and the upward direction of the automobile, respectively. However, the relationship between the front-back direction, the left-right direction, and the upward-downward direction of the battery pack 10, and the front-back direction, the left-right direction, and the upward-downward direction of the automobile are not limited to this example.

Hereinafter, a direction perpendicular to the Z direction is referred to as a horizontal direction according to necessity.

The battery pack 10 includes four battery modules 100, an accommodation body 200, a lower bracket 310, an upper bracket 320, a disconnect switch 410, and a breather 420. The four battery modules 100 include a pair of the battery modules 100 on the left side arranged in the X direction and a pair of the battery modules 100 on the right side arranged in the X direction. The disconnect switch 410 may also be generally referred to as, for example, a service disconnect switch or a service plug. The accommodation body 200 includes a lower case 210 and an upper case 220. The lower case 210 may also be generally referred to as, for example, a tray or a main body unit. The lower case 210 includes a lower plate 212 and a side frame 214. The upper case 220 may also be generally referred to as, for example, a cover or a lid portion.

Each of the battery modules 100 includes a plurality of battery cells stacked in the horizontal direction. In each of the battery modules 100, for example, a plurality of battery cell groups including a plurality of battery cells connected in parallel are connected in series. Alternatively, a plurality of single battery cells may be connected in series.

A pair of the terminals 110 is provided in front of the side frame 214. The pair of the terminals 110 is arranged substantially parallel in the Y direction. The front end portion of each of the terminals 110 projects forward from the front surface of the side frame 214. In an electric path, the four battery modules 100 are connected in series between a pair of the terminals 110.

The number and arrangement of the battery modules 100 are not limited to the example according to the embodiment. For example, the number of the battery modules 100 may be only two, only three, or five or more. In other words, the battery pack 10 can include a plurality of battery modules 100.

The lower case 210 and the upper case 220 are attached to each other via a seal member 230. The lower case 210, the upper case 220, and the seal member 230 form an accommodation space 250. The accommodation space 250 accommodates the four battery modules 100, the disconnect switch 410, the lower bracket 310, and the upper bracket 320.

The lower plate 212 defines a bottom portion of the accommodation space 250. The side frame 214 defines a side portion of the accommodation space 250. Specifically, the side frame 214 is provided along the outermost circumference of the lower plate 212 when viewed from the Z direction. The upper case 220 defines a top portion of the accommodation space 250.

The seal member 230 is, for example, an elastic material such as rubber. The seal member 230 is provided over the entire circumference of the side frame 214 when viewed from the Z direction. Thereby, the seal member 230 surrounds the accommodation space 250 when viewed from the Z direction. Accordingly, the accommodation space 250 can be sealed from a space outside the accommodation body 200 by the seal member 230.

The lower bracket 310 and the upper bracket 320 overlap in two stages with the accommodation space 250. Specifically, the lower end of the lower case 210 is fixed to the lower plate 212 with a fastener such as an unillustrated bolt. The lower case 210 covers at least some of the battery modules 100. The lower end of the upper bracket 320 is fixed to the upper surface of the lower bracket 310 by a fastener such as an unillustrated bolt. The upper bracket 320 projects upward from the upper surface of the lower bracket 310.

The disconnect switch 410 has a function of disconnecting a circuit electrically connecting the battery modules 100. Some of the battery modules 100 are electrically connected to each other via the disconnect switch 410. In the embodiment, the circuit electrically connecting the battery modules 100 may be a high voltage circuit. Thus, under a predetermined condition such as maintenance work of the battery pack 10 or emergency stoppage of the battery pack 10, the circuit electrically connecting the battery modules 100 needs to be disconnected to ensure safety of a worker of the battery pack 10. In the embodiment, the circuit connecting the battery modules 100 can be disconnected by operating the disconnect switch 410.

The disconnect switch 410 is provided at the front portion of the upper end of the upper bracket 320. Accordingly, the disconnect switch 410 can be locally arranged at a high position. In the embodiment, the disconnect switch 410 is oriented diagonally upward. As illustrated in Fig. 1, the front surface of the disconnect switch 410 is exposed from the upper case 220. Accordingly, the worker of the battery pack 10 can open the lid 52 provided on the floor panel 50 and operate the disconnect switch 410 from the front of the battery pack 10.

Air inside the accommodation space 250 and air outside the accommodation space 250 are passable through the breather 420. Specifically, the breather 420 has a ventilation membrane for equalizing a difference between pressure inside the accommodation space 250 and pressure outside the accommodation space 250. Thus, when the pressure outside the accommodation space 250 is higher than the pressure inside the accommodation space 250, the breather 420 allows air outside the accommodation space 250 to enter inside of the accommodation space 250. Contrarily, when the pressure inside the accommodation space 250 is higher than the pressure outside the accommodation space 250, the breather 420 discharges the air inside the accommodation space 250 to outside of the accommodation space 250. The breather 420 can shield foreign matter such as water and dust. Accordingly, the foreign matter such as water and dust can be suppressed from entering from the space outside the accommodation space 250 into the space inside the accommodation space 250.

The breather 420 is provided at the rear portion of the upper end of the upper bracket 320. Accordingly, the breather 420 can be locally arranged at a high position. In the embodiment, the disconnect switch 410 and the breather 420 are arranged on opposite sides of the upper bracket 320 to each other in the X direction. Thereby, the breather 420 is arranged on the opposite side of the side of the upper bracket 320 facing the lid 52. Thus, water flowing from the front of the floor panel 50 can be prevented from being directly injected to the breather 420.

The lower bracket 310 is provided with at least one electronic component 312. In the example illustrated in Fig. 2, two electronic components 312 are arranged on opposite sides of the upper bracket 320 in the Y direction when viewed from above. However, the number and arrangement of the lower brackets 310 are not limited to the example illustrated in Fig. 2. Each of the electronic components 312 controls a plurality of the battery modules 100. In the embodiment, the electronic component 312 is a battery management system (BMS). For example, the electronic component 312 manages and controls charging and discharging of a plurality of the battery modules 100.

In the embodiment, each of the electronic components 312 is provided to the lower bracket 310, which is different from the upper bracket 320 provided with the disconnect switch 410 and the breather 420. An area of the lower bracket 310 is larger than an area of the upper bracket 320 when viewed from above. Each of the electronic components 312 is provided to a portion of the lower bracket 310 that does not overlap with the upper bracket 320 with the Z direction. Accordingly, the mounting efficiency of a component around the disconnect switch 410 can be improved.

The structure of a plurality of brackets provided with the disconnect switch 410 and the breather 420 is not limited to the lower bracket 310 and the upper bracket 320 according to the embodiment. For example, the disconnect switch 410 and the breather 420 may be provided to a plurality of three or more brackets that overlap in three stages with the accommodation space 250. In the example, the disconnect switch 410 and the breather 420 can be provided to the uppermost stage bracket. The electronic component 312 can be provided to the bracket at a stage lower than the uppermost stage bracket. In this case, the electronic component 312 can be arranged in a region that does not overlap with the uppermost stage bracket in the Z direction. Thereby, the disconnect switch 410 and the breather 420 can be locally arranged at a high position while improving the mounting efficiency of a component around the disconnect switch 410.

The embodiments according to the present invention have been described above with reference to the drawings, but these are exemplifications of the present invention, and various configurations other than those described above can also be adopted.

This application claims priority based on Japanese patent application No. 2022-139692, filed on September 2, 2022, the disclosure of which is incorporated herein in its entirety by reference.

### REFERENCE SIGNS LIST

10 Battery pack, 50 Floor panel, 52 Lid, 100 Battery module, 110 Terminal, 200 Accommodation body, 210 Lower case, 212 Lower plate, 214 Side frame, 220 Upper case, 230 Seal member, 250 Accommodation space, 310 Lower bracket, 312 Electronic component, 320 Upper bracket, 410 Disconnect switch, 420 Breather

## Claims

1. A battery pack comprising:
a plurality of battery modules;
an accommodation body that defines an accommodation space accommodating the plurality of battery modules;
a plurality of brackets overlapping in a plurality of stages with at least a portion of the accommodation space; and
a disconnect switch for disconnecting a circuit electrically connecting the battery modules to each other, the disconnect switch being provided to the plurality of brackets.

2. The battery pack according to claim 1, further comprising
an electronic component provided to at least one of the plurality of brackets, the electronic component being for controlling the plurality of battery modules.

3. The battery pack according to claim 1 or 2, further comprising
a breather through which air inside the accommodation space and air outside the accommodation space are passable, wherein
the disconnect switch and the breather are arranged on opposite sides of the plurality of brackets to each other.
